(19) Europäisches Patentamt
European Patent Office
Office européen des brevets

(11) **EP 2 856 556 B1**

(12) **EUROPEAN PATENT SPECIFICATION**

(45) Date of publication and mention
of the grant of the patent:
**09.05.2018 Bulletin 2018/19**

(51) Int Cl.:
*H01Q 1/24* (2006.01)      *H01Q 3/40* (2006.01)
*H01Q 25/00* (2006.01)

(21) Application number: **13728881.7**

(22) Date of filing: **28.05.2013**

(86) International application number:
**PCT/US2013/042833**

(87) International publication number:
**WO 2013/181131 (05.12.2013 Gazette 2013/49)**

(54) **TRANSFORMING PRECODED SIGNALS FOR WIRELESS COMMUNICATION**

UMWANDLUNG VON VORCODIERTEN SIGNALEN FÜR DRAHTLOSE KOMMUNIKATION

TRANSFORMATION DE SIGNAUX PRÉCODÉS EN VUE D'UNE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2012   US 201213485168**

(43) Date of publication of application:
**08.04.2015   Bulletin 2015/15**

(73) Proprietor: **Alcatel Lucent
91620 Nozay (FR)**

(72) Inventors:
• **MONOGIOUDIS, Pantelis
Murray Hill, NJ 07974-0636 (US)**
• **KORISCH, Ilya
Murray Hill, NJ 07974-0636 (US)**
• **LIU, Ruoheng
San Diego, CA 92126 (US)**
• **SONI, Robert
Murray Hill, NJ 07974-0636 (US)**

(74) Representative: **Menzietti, Domenico et al
Alcatel Lucent
Intellectual Property & Standards
70430 Stuttgart (DE)**

(56) References cited:
EP-A1- 2 296 225         WO-A1-03/023897
GB-A- 2 335 572          US-A1- 2004 160 374
US-A1- 2005 085 270

**Description**

## CROSS REFERENCE TO RELATED APPLICATIONS

This application is related to U.S. Patent Application 13/098,693, filed on May 2, 2011.

## BACKGROUND

This application relates generally to communication systems, and, more particularly, to wireless communication systems.

Wireless communication systems typically use radiofrequency signals to convey information over an air interface between transmitters and receivers. For example, a base station (or eNodeB) may communicate with user equipment (UE) using transceivers implemented in the base station and the user equipment. The simplest transceivers use a single antenna to transmit and receive the radiofrequency signals. However, more advanced transceivers can use more than one antenna for transmission and reception of signals transmitted over the air interface. For example, base stations can employ arrays of 2, 4, 8, or more antennas for transmitting and receiving radiofrequency signals over the air interface. User equipment can also implement more than one antenna. Systems that employ multiple antennas on the receiver side and/or the transmitter side are generally referred to as multiple-in-multiple-out (MIMO) communication systems. MIMO systems may also be implemented as single-user MIMO (SU-MIMO) systems or multiple-user MIMO (MU-MIMO) systems.

The wireless communication channels in a MIMO system are defined by a channel matrix that determines the signal received at the receiver-side antennas as a function of the signal transmitted by the transmit-side antennas. The channel matrix is therefore a function of the transmitter and receiver antenna configurations, as well as the scattering environment between the transmitter and the receiver. The dimensions of the channel matrix are determined by the number of transmitter-side antennas and receiver-side antennas. Cross-antenna interference, which is represented by the non-diagonal elements of the channel matrix, can in theory be removed by pre-coding transmitted signals to diagonalize the channel matrix. For example, a pre-coding matrix that diagonalizes the downlink channel matrix could be determined for each UE using a conventional eigenvalue/eigenvector decomposition of the channel matrix for symmetrical channel matrix or singular value decomposition of the channel matrix for asymmetrical channel matrix. However, defining a precise pre-coding matrix for each UE requires sufficient feedback from the UE to exactly determine the downlink channel matrix, as well as sufficient computing power to compute the pre-coders in real time. In practice, constraints on the uplink channel overhead and transceiver design make this impossible.

Conventional MIMO systems therefore use a codebook that includes a predetermined quantized set of pre-coding matrices. The codebook includes a set of pre-coding matrices that diagonalize an ideal channel matrix defined for a specific antenna configuration and a non-scattering environment. The transmitter can then choose one of the pre-coding matrices based on feedback received from the receiver. For example, a UE can feedback channel state information that can be used to select a pre-coding matrix to apply to signals transmitted over the downlink to the UE. Exemplary channel state information (CSI) includes channel quality information (CQI), a pre-coding matrix indicator (PMI), a rank indicator (RI), a pre-coding type indication (PTI), and the like. The CQI typically represents the recommended modulation scheme and coding rate that should be used for the downlink transmission, the RI provides information about the rank of the channel and can be used to determine the optimal number of layers that should be used for downlink transmission in spatial multiplexed systems, and the PMI indicates which pre-coding matrix to use, *e.g.,* in closed loop spatial multiplexing systems. The dimensions of the pre-coding codebook are constrained by the control signaling overhead available for providing the necessary feedback.

Codebooks are typically standardized for one assumed antenna configuration, such as a uniform linear antenna array (ULA). For example, on the downlink, codebooks for uniform linear arrays of 2, 4, and 8 TX antennas have been standardized for the Rel-10 LTE technical specification to support SU-MIMO and MU-MIMO. The eNodeBs and UE that operate in accordance with the standard must use these codebooks for transmission over the air interface, regardless of their actual antenna configurations. Furthermore, the CSI feedback mechanism design for DL MIMO is based on the standardized codebooks and each UE assumes that the signals it has received were generated by an eNodeB that implements the assumed antenna configuration. For another example, on the uplink, the pre-coding vector assigned to the UE for UL SU or MU-MIMO is based on codebooks for 2 and 4 TX antennas that are defined in the specification established by the Third Generation Partnership Project (3GPP). The eNodeB will assign a codebook from the specified set to each UE regardless of the actual antenna configuration used by the UE.

US 2004/0160374 A1 teaches an N-element rotational-symmetric array antenna generating N fixed pencil-beams simultaneously with an omnidirectional beam. An NxN Butler matrix can be used to feed the array antenna, using fewer than N input ports of the Butler matrix to produce the pencil-beams. One or more of the modes generated by the Butler matrix can be individually accessed to produce one or more corresponding omnidirectional beams.

US 2005/0085270 A1 discloses a wireless antenna traffic matrix. A beam shaping antenna matrix for use in wireless cell towers that is manually-configured at a patch panel by a wireless operator based on selection of a desired beam size and point of direction. The traffic matrix allows a wireless operator to sculpt and resculpt the beams to accommodate demographic or other changes preferably without a large amount of hardware or intensive processing capability.

WO 03/023897 A1 teaches a method and apparatus for beam steering in a wireless communication system. A method and apparatus is provided that allows M transceivers to transmit/receive using M2N distinct beams using passive beam steering. This provides for the use of arbitrary narrow beams with a number of transceivers that is a fraction of the number of beams but ensures 360 ° coverage.

GB 2 335 572 A teaches a multiple beam antenna system. In a CDMA wireless base station, signals that have been received from a plurality of antenna elements of an antenna array are subjected to a reception beam former to electrically form a plurality of uplink beams. Reception is carried out on the basis of the optimum beam, for example the beam for which the power is maximum.

EP 2 296 225 A1 teaches a reconfigurable beam-forming-network architecture. A beam-forming network comprising: a plurality (N,) of input signal ports (IP); a plurality (NO) of output signal ports (OP); a weighting and interconnecting network (WIN) comprising a plurality of signal dividers (SD), phase and amplitude weighting elements (WE), switches (SW1, SW2) and signal combiners (SC), for associating each input port to output ports through respective weighting units.

## SUMMARY OF EMBODIMENTS

The disclosed subject matter is directed to addressing the effects of one or more of the problems set forth above. The following presents a simplified summary of the disclosed subject matter in order to provide a basic understanding of some aspects of the disclosed subject matter. This summary is not an exhaustive overview of the disclosed subject matter. It is not intended to identify key or critical elements of the disclosed subject matter or to delineate the scope of the disclosed subject matter. Its sole purpose is to present some concepts in a simplified form as a prelude to the more detailed description that is discussed later.

In one embodiment, an apparatus is provided for transforming signals for wireless communication. One embodiment of the apparatus includes a transformer comprising a plurality of first ports and second ports. Each first port is associated with a mode of a first antenna array configuration and each second port is configurable to be communicatively coupled to one of a first plurality of antennas deployed in the first antenna array configuration. This embodiment of the apparatus also includes a selector configurable to select a subset of the modes of the first antenna array configuration based on a degree of variation of each mode with azimuth. This embodiment of the apparatus further includes a mapper configured to map each of a plurality of third ports to one of the first ports associated with one of the subset of modes. Each of the third ports is associated with a mode of a second antenna array configuration.

In another embodiment, a base station is provided. One embodiment of the base station includes a pilot signal generator configurable to generate a plurality of pilot signals corresponding to antenna elements of a first antenna array configuration and a plurality of antennas deployed in a second antenna array configuration. This embodiment of the base station also includes a transform matrix including a plurality of first ports and a plurality of second ports. Each first port is associated with one of the antenna elements of the first antenna array configuration and each second port is communicatively coupled to one of the antennas deployed in the second antenna array configuration. The transform matrix is configurable to map each of the pilot signals to a different one of a selected subset of modes of the second antenna array configuration for transmission by the antennas in the second antenna array configuration.

In yet another embodiment, a method is provided for transforming signals for wireless communication. Embodiments of the method include selecting a subset of modes of a first antenna array configuration based on a degree of variation of each mode with azimuth and mapping each of a plurality of first ports to one of a plurality of second ports associated with one of the subset of modes. Each of the first ports is associated with a mode of a second antenna array configuration. Embodiments of the method also include transforming signals conveyed between the second ports and a corresponding plurality of third ports. Each second port is associated with one of the modes of the first antenna array configuration and each third port is configurable to be communicatively coupled to one of a plurality of antennas deployed in the first antenna array configuration.

## BRIEF DESCRIPTION OF THE DRAWINGS

The disclosed subject matter may be understood by reference to the following description taken in conjunction with the accompanying drawings, in which like reference numerals identify like elements, and in which:

Figure 1 conceptually illustrates a first exemplary embodiment of a wireless communication system;

Figures 2A, 2B, and 2C depict three exemplary embodiments of active antenna arrays;

Figure 3 conceptually illustrates one exemplary embodiment of a transform matrix;

Figures 4A and 4B conceptually illustrate a downlink path and an uplink path, respectively, in one exemplary embodiment of a base station;

Figure 5 conceptually illustrates one exemplary embodiment of a uniform circular array;

Figures 6A and 6B show the array factor for broadside and end-fire angles respectively for exemplary embodiments of uniform circular arrays and uniform linear arrays with N=8 idealistic isotropic antenna elements;

Figure 7A shows the uniform circular array response that results when the columns of the DFT matrix are used to provide the possible excitation weights that can be applied in a uniform circular array of N=8 elements;

Figure 7B depicts the response of a uniform linear array to the same excitation weights shown in Figure 7A;

Figure 8 conceptually illustrates one exemplary embodiment of a transmit chain for precoding and transforming signals for transmission;

Figure 9 depicts different orders of a Bessel function;

Figure 10 depicts one exemplary embodiment of an array pattern $F_c\,(\theta,\phi)$;

Figure 11 conceptually illustrates one exemplary embodiment of a continuous circular array;

Figures 12A and 12B depict exemplary embodiments of mode patterns;

Figure 13 shows beam formation using an even number of circular modes;

Figure 14 shows the beamwidth of a directional pattern formed with circular modes as a function of the number of nodes included;

Figure 15 shows a minimum number of elements and array diameter used to generate a particular number of usable modes;

Figures 16A-C depict exemplary embodiments of mode patterns for omnidirectional antennas;

Figures 17A-C depict exemplary embodiments of mode patterns for 130° beamwidth antennas; and

Figure 18 conceptually illustrates one exemplary embodiment of a base station.

While the disclosed subject matter is susceptible to various modifications and alternative forms, specific embodiments thereof have been shown by way of example in the drawings and are herein described in detail. It should be understood, however, that the description herein of specific embodiments is not intended to limit the disclosed subject matter to the particular forms disclosed, but on the contrary, the intention is to cover all modifications, equivalents, and alternatives falling within the scope of the appended claims.

## DETAILED DESCRIPTION OF SPECIFIC EMBODIMENTS

Illustrative embodiments are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure. The description and drawings merely illustrate the principles of the claimed subject matter. It will thus be appreciated that those skilled in the art may be able to devise various arrangements that, although not explicitly described or shown herein, embody the principles described herein and may be included within the scope of the claimed subject matter. Furthermore, all examples recited herein are principally intended to be for pedagogical purposes to aid the reader in understanding the principles of the claimed subject matter and the concepts contributed by the inventor(s) to furthering the art, and are to be construed as being without limitation to such specifically recited examples and conditions.

The disclosed subject matter will now be described with reference to the attached figures. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, *i.e.,* a definition that is different from the ordinary and customary meaning as understood by those skilled in the art, is intended to be implied by consistent usage of the term or phrase herein. To the extent that a term or phrase is intended to have a special meaning, *i.e.,* a meaning other than that understood by skilled artisans, such a special definition will be expressly set forth in the specification in a definitional manner that directly and unequivocally provides the special definition for the term or phrase. Additionally, the term, "or," as used herein, refers to a non-exclusive "or," unless otherwise indicated (e.g., "or else" or "or in the alternative"). Also, the various embodiments described herein are not necessarily mutually exclusive, as some embodiments can be combined with one or more other embodiments to form new embodiments.

Base stations in closed loop multiple-in-multiple-out (CL-MIMO) systems transmit pilot signals to user equipment, which can perform measurements on the received pilot signals to generate channel state information, channel quality information, and the like. Based on these measurements, the user equipment may select precoding matrices and transmit feedback including information indicative of the selected precoding matrices to the base station so that the base station can apply the selected precoding matrices to subsequent downlink transmissions. The precoding matrices are standardized so that the user equipment can generate meaningful feedback and transmit the feedback using a reasonable amount of overhead. Current standards specify sets of precoding matrices or code books for uniform linear antenna arrays (ULA) that transmit different pilot signals from each antenna in the array. The precoding matrices were designed with ULA in mind and its columns assuming rank-1 transmission when applied to the ULA result in orthogonal beams that scan almost uniformly the azimuth angle.

New antenna technologies such as modular antennas that support flexible deployment of different antenna configurations may allow service providers to deploy a number of different configurations such as uniform circular arrays or uniform cylindrical arrays. The different antenna configurations have different strengths and weaknesses and so service providers may implement base stations that use a variety of different configurations depending on the context. However, standardized precoding matrices have not been defined for every possible antenna deployment. Moreover, standardizing additional sets of precoding matrices for antenna configurations in addition to ULA would increase the computational requirements at the user equipment or require user equipment to be able to discover the type of antenna configuration that is being used by the serving base station.

At least in part to support deployment of different antenna array configurations, the present application describes embodiments of transformation elements that map (N) linear array elements assumed for a standard set of ULA precoding matrices to (M) circular modes of a uniform circular array (UCA). In one embodiment, N<M and each linear array element is mapped to one of a subset of the total number of circular modes supported by the UCA. The subset of circular modes may be selected based on the degree of variation of each mode with azimuth. For transmissions of pilot signals on the downlink, the pilot signals are provided to (N) input ports (virtual or real) of the transformation element. The transformation element applies an NxM transformation matrix to map the pilot signals received on the (N) input ports to the (M) output ports that are communicatively coupled to the antennas in the UCA. Pilot signals associated with each of the linear array elements may excite one of the selected circular modes of the UCA so that the pilot signal is transmitted substantially uniformly in azimuth, *e.g.,* with a degree of variation with azimuth that is less than a selected threshold. Beamforming of downlink signals, such as traffic signals, may be performed by applying different weights to the circular modes that are used to transmit the pilot signals. Uplink signals received by the (M) antennas are communicated to the (M) input ports of the transformation element, which applies the NxM transformation matrix to map the uplink signals received on the (M) input ports to (N) output ports (virtual or real) coupled to a receiver. Although embodiments of the uplink signal processing described herein may involve the transformation matrix T of the downlink, the antenna signals may be directly processed and therefore may not be constrained by the matrix T.

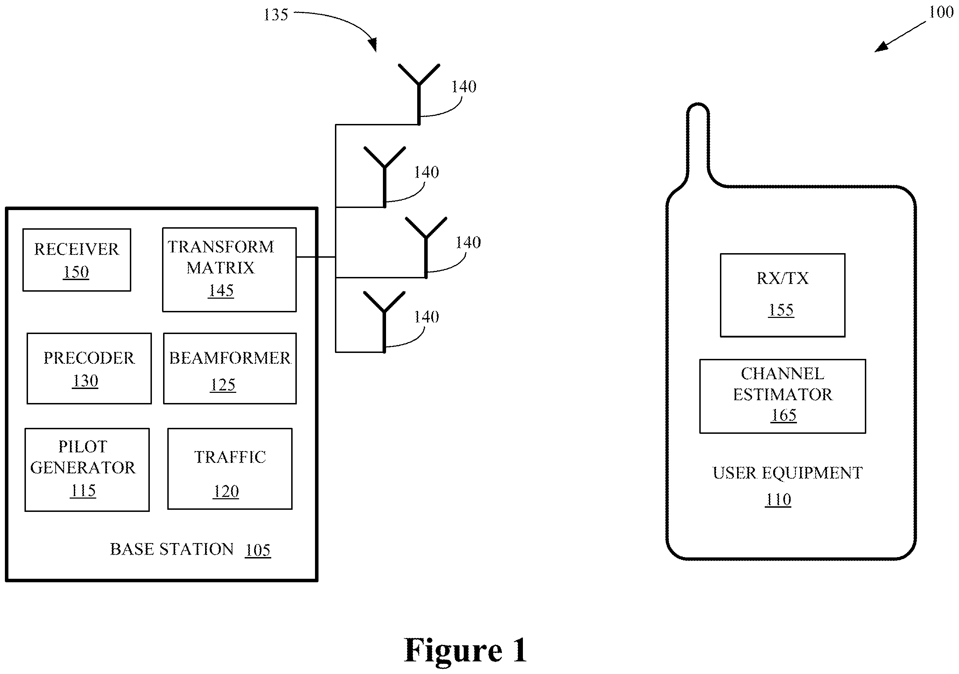

Figure 1 conceptually illustrates a first exemplary embodiment of a wireless communication system 100. In the illustrated embodiment, the wireless communication system includes one or more base stations 105 for providing uplink or downlink wireless connectivity to one or more user equipment 110. The wireless communication system 100 depicted in Figure 1 may operate according to the Long Term Evolution (LTE) standards or protocols agreed upon by the Third Generation Partnership Project (3GPP, 3GPP2). The wireless communication system 100 may also operate according to standards or protocols for a Universal Mobile Telecommunication System (UMTS). However, persons of ordinary skill in the art having benefit of the present disclosure should appreciate that alternative embodiments of the wireless communication system 100 may operate according to other standards or protocols. In the illustrated embodiment, the base stations 105 or user equipment 110 may implement closed loop multiple-in-multiple-out (CL-MIMO) communication techniques on the uplink or downlink, as described herein.

The illustrated embodiment of the base station 105 includes functionality for generating signals for transmission over the downlink. For example, the base station 105 may include a pilot signal generator 110 that can be configured to generate one or more pilot signals. The pilot signal generator 110 may be configured to generate pilot signals for transmission by antennas that are deployed in an assumed antenna array configuration. For example, the pilot signal generator 110 may generate a plurality of distinct orthogonal pilot signals and may then supply the signals to ports associated with different antennas in a uniform linear array of antennas. In the illustrated embodiment, the base station 105 also includes a traffic signal generator 120 that can be configured to generate signals for conveying data traffic over the air interface. The traffic signal generator 120 may be configured to generate data traffic signals for transmission by antennas that are deployed in an assumed antenna array configuration. For example, the traffic signal generator 120 may generate data traffic signals and may then supply the signals to ports associated with different antennas in a uniform linear array of antennas.

A beamformer 125 may also be implemented in the base station 105. In the illustrated embodiment, the beamformer 125 may be a static beamformer 125 that generates or applies weights to modify the amplitude or phase of signals received at its input ports to create output signals. The output signals may be provided (perhaps in addition to precoding or transforming, as discussed herein) to an antenna array so that the signals transmitted by the antenna array interfere constructively or destructively to create spatial selectivity. Beamforming techniques are well known in the art and in the interest of clarity only those aspects of beamforming that are relevant to the claimed subject matter are discussed herein. In the illustrated embodiment, the beamformer 125 may be configured to generate the weights based upon an assumed antenna configuration such as a uniform linear array of antennas. For example, the beamformer 125 may apply weights to the received pilot signals so that beamformer outputs corresponding to different antennas in the assumed antenna configuration each receive a signal corresponding to one of the received pilot signals. For another example, the beamformer 125 may apply weights to the received data traffic signals that would cause the data traffic to be preferentially transmitted in a particular direction by the assumed antenna configuration.

Precoding of the signals that are to be transmitted may be performed by a precoder 130. In the illustrated embodiment, the precoder 130 uses or accesses a codebook that includes a predetermined quantized set of precoding matrices. The codebook may include a set of precoding matrices that diagonalize an ideal channel matrix defined for a specific antenna configuration and a non-scattering environment. The base station 105 may then choose one of the precoding matrices based on feedback received from the user equipment 110. For example, user equipment 110 can feed back channel state information that can be used to select a pre-coding matrix to apply to signals transmitted over the downlink to the user equipment 110. Exemplary channel state information (CSI) includes channel quality information (CQI), a pre-coding matrix indicator (PMI), a rank indicator (RI), a pre-coding type indication (PTI), and the like. In the illustrated embodiment, the codebooks may be determined for an assumed antenna configuration, such as a cross-polarization antenna array or a uniform linear antenna array. The precoder 130 may use these codebooks for precoding signals for transmission over the air interface, regardless of the actual antenna configuration implemented by the base station 110. Furthermore, the CSI feedback mechanism design for DL MIMO is based on the standardized codebooks and user equipment 110 assume that the received signals were generated by a base station 105 that implements the assumed antenna configuration. For another example, on the uplink, the pre-coding vector assigned to the user equipment 110 for UL SU or MU-MIMO is based on codebooks for 2 and 4 TX antennas that are defined in the specification established by the Third Generation Partnership Project (3GPP). The base station 105 may therefore assign a codebook from the specified set to user equipment 110 regardless of the actual antenna configuration used by the user equipment 110.

Although both the beamformer 125 and the precoder 130 are depicted in Figure 1, persons of ordinary skill in the art having benefit of the present disclosure should appreciate that in various alternative embodiments the base station 105 may implement either beamforming using the beamformer 125 or precoding using the precoder 130. Alternatively, the base station 105 may implement both beamforming and precoding. As used herein, the term "beamforming" may refer to co-phasing of the transmitted downlink traffic signal towards a location such as a location of user equipment 110 that is determined using relatively long-term statistical information extracted from traffic and pilot signals received over the uplink by the base station 105. As used herein, the term "precoding" may refer to co-phasing of the transmitted downlink traffic signal towards a location such as a location of user equipment 110 using relatively short-term information (*e.g.,* feedback including PMI) transmitted over the uplink by user equipment 110. Embodiments of the transform method described herein can be applied to short-term or long-term implementations, *e.g.,* to embodiment that include the beamformer 125 or the precoder 130 or both entities.

The base station 105 may be physically, electronically, or communicatively coupled to an antenna array 135 that includes a plurality of antennas 140 for transmitting or receiving radiofrequency signals. Although standards compliant elements of the base station 105, such as the beamformer 125 or the precoder 130, may assume a particular antenna configuration, the deployed antenna array 135 may have a different configuration. For example, the standards compliant elements may assume that the antennas are deployed in a uniform linear array, but the actual deployment may use antennas 140 that are deployed in a variety of configurations including a circular array, a cylindrical array, and the like. Moreover, persons of ordinary skill in the art having benefit of the present disclosure should appreciate that the array of antennas 140 may include any number of antennas 140. For example, arrays of 2, 4, 8, and 12 antennas are often deployed in various configurations. User equipment 110 may also implement multiple antennas (not shown in Figure 1) for transmitting or receiving radiofrequency signals.

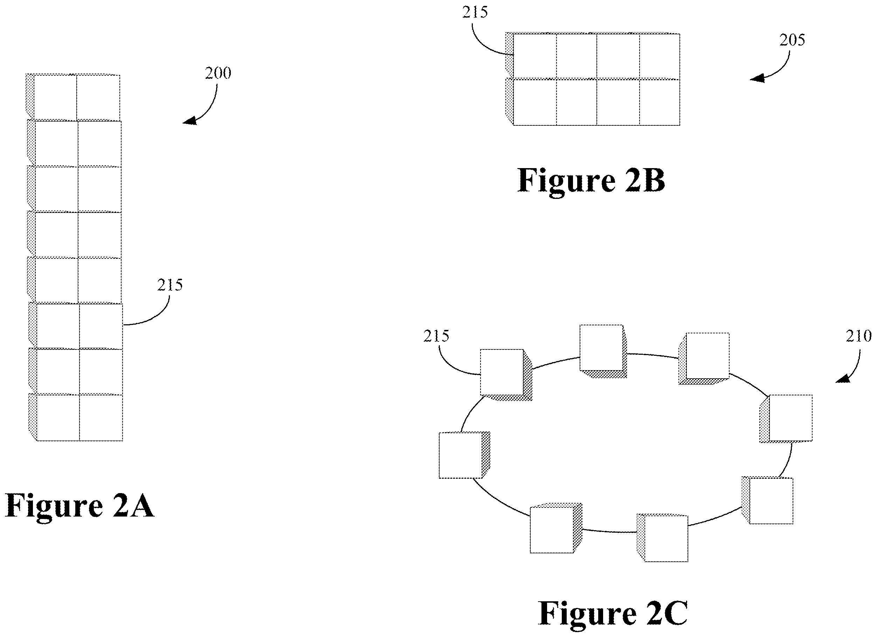

Figures 2A, 2B, and 2C depict three exemplary embodiments of active antenna arrays 200, 205, 210. The illustrated embodiments show different arrangements of individual antenna elements 215. Figure 2A depicts a vertical linear array 200 including 16 interconnected antenna elements 215. Figure 2B depicts a horizontal linear array 200 including eight interconnected antenna elements 215. Figure 2C depicts a circular array 210 including eight interconnected antenna elements 215. Square or rectangular arrays 200, 205 may be particularly suitable for deployment on building façades or in public places such as train stations and airports. Circular arrays 210 or cylindrical arrays (not shown in Figures 2A-C) with omnidirectional or directional elements may be particularly suitable for installation on poles, towers, lampposts, or the like. However, persons of ordinary skill in the art having benefit of the present disclosure should appreciate that the particular array structures, numbers of antenna elements 215, and deployment scenarios shown in Figures 2A-C are intended to be illustrative and are not intended to be limiting except as explicitly set forth in the claims.

Embodiments of the active antenna arrays 200, 205, 210 may be configured to support different beamforming capabilities. For example, embodiments of the active antenna arrays 200, 205, 210 may support beamforming capabilities such as digital tilt, differentiated tilt per carrier/band, differentiated uplink/downlink (UL/DL) tilt, flexible beam shaping capability, or vertical beamforming with multiple beams from the array with flexible power sharing between the beams. The different beams created by the active antenna arrays 200, 205, 210 may form inner and outer coverage areas within a conventional cellular system layout. Various embodiments of the active antenna arrays 200, 205, 210 may support different combinations of the beamforming capabilities described herein, as well as other beamforming capabilities.

Referring back to Figure 1, the base station 105 may implement a transform matrix 145 that can be used to transform signals for transmission over the downlink or signals received over the uplink. The transform matrix may be determined based on the actual configuration of the antenna array 135 and the assumed antenna configuration used by other elements of the base station 105 such as the beamformer 125 or the precoder 130. In the illustrated embodiment, the transform matrix 145 includes one set of ports that are configured to convey signals corresponding to the ports of the assumed antenna array and another set of ports that are configured to convey signals to and from the antennas 140. As discussed herein, the transform matrix 145 can be configured to map downlink signals from the virtual ports corresponding to the assumed antenna array configuration to the ports corresponding to the antennas 140. For example, the transform matrix 145 may be configured to map the pilot signals received from the pilot generator 115 to a selected subset of modes of the antenna array 135 for transmission over the air interface. The transform matrix 145 may also be configured to map uplink signals received by the antenna array 135 to virtual ports of a receiver 150 in the base station 105.

The user equipment 110 the wireless communication system 100 may include transceiver functionality 155 for transmitting or receiving signals over the air interface. In the illustrated embodiment, user equipment 110 also includes a channel estimator 165 that can be used to estimate channel quality or channel state information, e.g., using measurements of pilot signals transmitted by the base station 105. The user equipment 110 may use the estimated channel quality or channel state information to identify one or more precoding matrices that may be used for downlink transmission. User equipment 110 may also use the estimated channel quality or channel state information to generate feedback indicative of the channel state information or the precoding matrices. The feedback may then be transmitted to the base station 105.

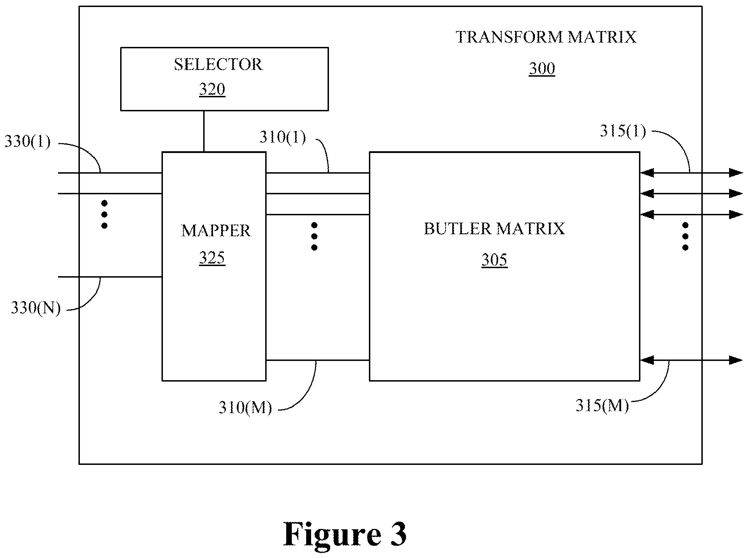

Figure 3 conceptually illustrates one exemplary embodiment of a transform matrix 300. In the illustrated embodiment, the transform matrix 300 includes a transformer 305 that implements an $M \times M$ matrix 305 that maps signals between a first set of ports 310 that are associated with modes of a first antenna array configuration and a second set of ports 315 that can be communicatively coupled to antennas deployed in the first antenna array configuration. The number of ports (M) may therefore be the same as the number of antennas deployed the first antenna array configuration. For example, the transformer 305 may implement a Butler matrix transformation that applies a predetermined phase increment between the first ports 310 and the second ports 315. Embodiments of the Butler matrix transformation may be configured to excite the modes of the first antenna array configuration in response to signals applied at the first ports 310.

The illustrated embodiment of the transform matrix 300 also includes a selector 320 configurable to select a subset of the modes of the first antenna array configuration based on a degree of variation of each mode with azimuth. The selector 320 may include logical elements that allow the selector 320 to actively or dynamically select the subset of the first antenna array modes, e.g., in response to actions such as coupling devices or antennas to the transform matrix 300 or reconfiguration of antennas that are coupled to the transform matrix. Alternatively, the selector 320 may include one or more passive elements (such as switches, fuses, registers, or other elements that indicate the selected modes) that can be configured to indicate the selected modes prior to operation or deployment, *e.g.,* by an engineer or designer based upon the antenna array configurations. For example, antenna modes of a uniform circular or cylindrical array may have different degrees of variation with azimuth, *e.g.,* the different modes may range between different maximum and minimum amplitudes as the angle of azimuth varies from 0 to $2\pi$. The selector 320 may therefore be configured to select only those modes that have a degree of variation that is less than or on the order of a predetermined threshold value. For example, the predetermined threshold value may be set a value such as 2 dB. The selector 320 may be implemented in hardware, firmware, software, or any combination thereof.

The selector 320 may be communicatively coupled to a mapper 325 that may be configured to map (responsive to signals provided by the selector 320) ports 330 of the transform matrix 300 to one of the ports 310 associated with one of the selected subset of modes. For example, the ports 330 may be mapped to the ports 310(1-N) of the matrix 305. In the illustrated embodiment, the number of ports 330(1-N) is less than the number of ports 310(1-M) or the number of ports 315(1-M). The mapper 325 may be implemented in hardware, firmware, software, or any combination thereof.

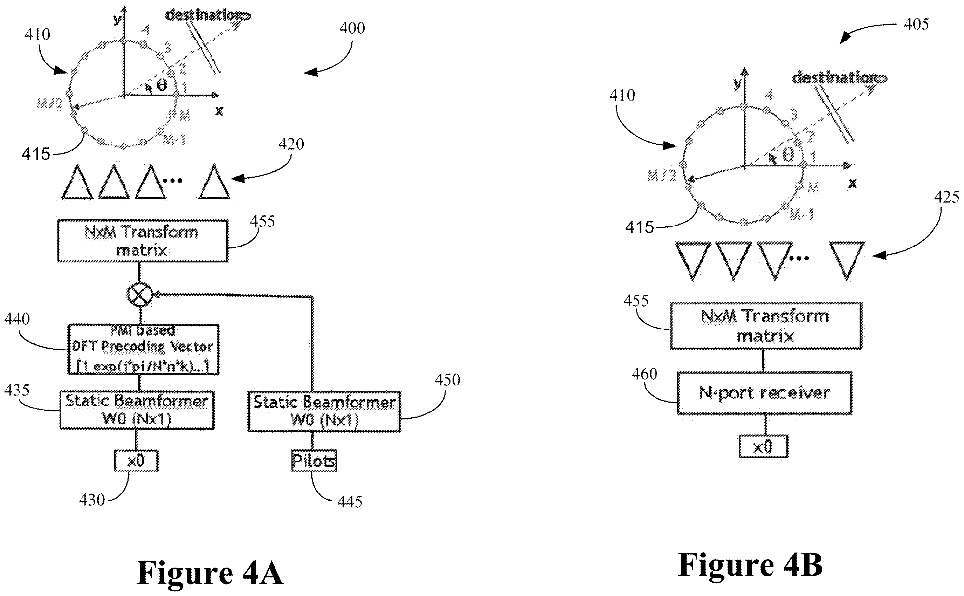

Figures 4A and 4B conceptually illustrate a downlink path 400 and an uplink path 405, respectively, in one exemplary embodiment of a base station. In the illustrated embodiment, a uniform cylindrical array 410 is used for transmitting downlink signals or receiving uplink signals over the air interface. Alternatively, a uniform circular array may be implemented in other embodiments of the base station. The uniform cylindrical array 410 includes (M) antenna elements 415 (only one indicated by a numeral in Figures 4A and 4B) distributed at equal angular intervals about a circle. The uniform cylindrical array 410 exchanges signals with other elements in the base station using M ports 420, 425 that are communicatively coupled to corresponding antenna elements 415. The ports 420 in the downlink path 400 are used to convey signals from the base station to the antenna elements 415 and the ports 425 in the uplink path 405 are used to convey signals from the antenna elements 415 to the base station.

The downlink path 400 includes a traffic signal generator 430 that generates a traffic signal that can be split between N ports (which may be virtual ports). A beamforming element 435 may be used to generate or apply a set of weights (W0) to the traffic signal, *e.g.* for sidelobe control. The beamformed signal may then be precoded using a precoding element 440. In the illustrated embodiment, the precoding elements 440 can apply discrete Fourier transform (DFT) precoding matrices. A precoding vector may be selected using feedback such as a PMI provided by user equipment. The downlink path 400 also includes a pilot signal generator 445 for generating pilot signals for transmission over the air interface. Exemplary pilot signals may include standardized reference signals such as the CSI-RS defined in LTE 3GPP R10 specifications. In the illustrated embodiment, the pilot signals are generated for an assumed antenna configuration that includes N antennas and consequently N pilots are generated by the pilot signal generator 445 and subsequently added to the stream. In the illustrated embodiment, a static beamformer 450 may be used to apply the pilot signals to ports associated with the N antennas of the assumed antenna configuration, *e.g.,* a uniform linear array.

The illustrated embodiment of the downlink path 400 also includes a transform matrix 455 that is used to map the signals generated based on the assumed antenna configuration to the ports 420 associated with the antenna elements 415 of the deployed uniform cylindrical array 410. For example, the transform matrix 455 may be an NxM transform matrix 455 that maps the N data streams to the M elements of a cylindrical array. The transform matrix 455 may be a Vandermonde matrix with phase increment of 2pi/M. Using the transform matrix 455 allows the base station to use the DFT precoding matrix associated with the uniform linear array to generate signals that drive transmissions by the uniform cylindrical array 410. The number of antennas M is greater than the number of ports N of the assumed antenna configuration and the ratio *M/N* is a design parameter, typically close to 2. In one embodiment, the transformation matrix 455 may be designed to support standardized R8 or R10 ULA-specific DFT precoding matrices. Using the transformation matrix 455 also allows user equipment to use standard procedures for PMI calculation for CL MIMO. As discussed herein, the pilot signals may be mapped to modes of the uniform cylindrical array 410 that have an approximately omnidirectional pattern in azimuth.

In the uplink path 405, the transform matrix 455 maps the M ports 425 corresponding to the antenna elements 415 to N virtual ports of a receiver 460 in the base station. As discussed herein, each port 425 that is used for uplink reception has an omnidirectional pattern in azimuth. The base station may therefore perform conventional receive operations on the transformed signal received at the N virtual ports as if the transform signal had been received by antennas in the assumed antenna configuration, *e.g.* a uniform linear array. Exemplary receive operations include maximal ratio combining (MRC), minimum mean squared error (MMSE), or other receive operations.

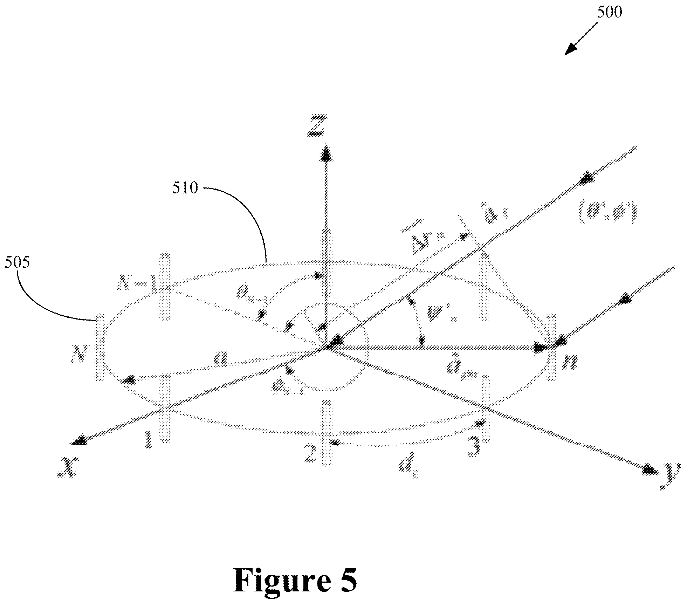

Figure 5 conceptually illustrates one exemplary embodiment of a uniform circular array 500. In the illustrated embodiment, the array 500 includes N antenna elements 505 that are equally spaced around a circle 510. In the illustrated embodiment, elevation angles $\theta \in [0, \frac{\pi}{2}]$ are measured from the z-axis and azimuth angles $\phi \in [0, 2\pi]$ are measured counterclockwise from the x-axis. Each of the N elements 505 is located at $a_{\rho n} = (a\cos\phi_n, a\sin\phi_n, 0)$, where $\phi_n = \frac{2\pi n}{N}$, $n = 0, ..., N-1$, is measured relative to the x-axis. The excitation weight applied in each element is denoted with $w_n$ and

each element 505 has a complex gain pattern $f_n(\theta,\phi)$. The electric field of a planewave, with wavenumber $\kappa = \dfrac{\omega}{c}$, radiated by the elements 505 in the far field region at point P defined by the angles $(\theta,\phi)$ is given by:

$$F(\theta,\phi) = f(\theta,\phi) \sum_{n=0}^{N-1} w_n e^{j\kappa a \, \sin\theta \cos(\phi-\phi_n)}$$

In the illustrated embodiment, each of the antenna elements 505 have the same antenna pattern $f_1(\theta,\phi) = f_2(\theta,\phi) = \cdots f_N(\theta,\phi) = f(\theta,\phi)$. However, persons of ordinary skill in the art having benefit of the present disclosure should appreciate that alternative embodiments may use other antenna patterns for the different antenna elements 505. The steering vector of the uniform circular array 500 may be represented by $a_{UCA}(\theta,\phi) = e^{j\kappa a \, \sin\theta \cos(\phi-\phi_n)}$.

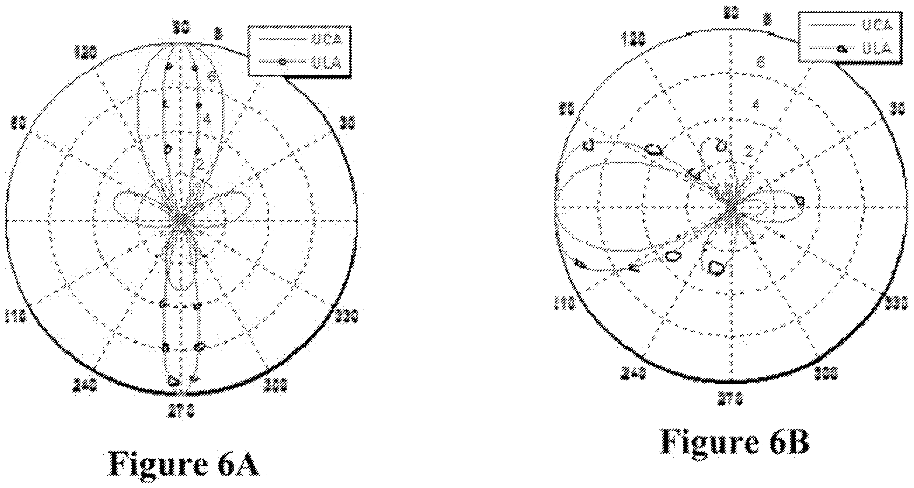

Relative to coverage-equivalent triangular uniform linear array structures, uniform circular arrays such as the uniform circular array 500 may suffer from increased mutual coupling, especially for closely-spaced elements $(d_c \leq \frac{\lambda}{2})$, as well as increased levels of sidelobes. For example, Figures 6A and 6B show the array factor for broadside and end-fire angles respectively for exemplary embodiments of uniform circular arrays and uniform linear arrays with N=8 ideal isotropic antenna elements. These examples show the larger sidelobes of the uniform circular array. These examples also show the increased directivity generated by the uniform circular array for some angles

As discussed herein, precoding vectors that are generated for one assumed antenna configuration are generally not optimal for other assumed antenna configurations. For example, existing standardized codebooks used to precode transmissions by a uniform linear array may not be compatible with transmission or reception by a uniform circular array. A unitary codebook generated for uniform linear array includes codewords that are the columns of a DFT matrix:

$$D_{k,l} = \frac{1}{\sqrt{N}} e^{-\frac{j2\pi kl}{N}} \qquad k = 1, \ldots, N, l = 1, \ldots, N.$$

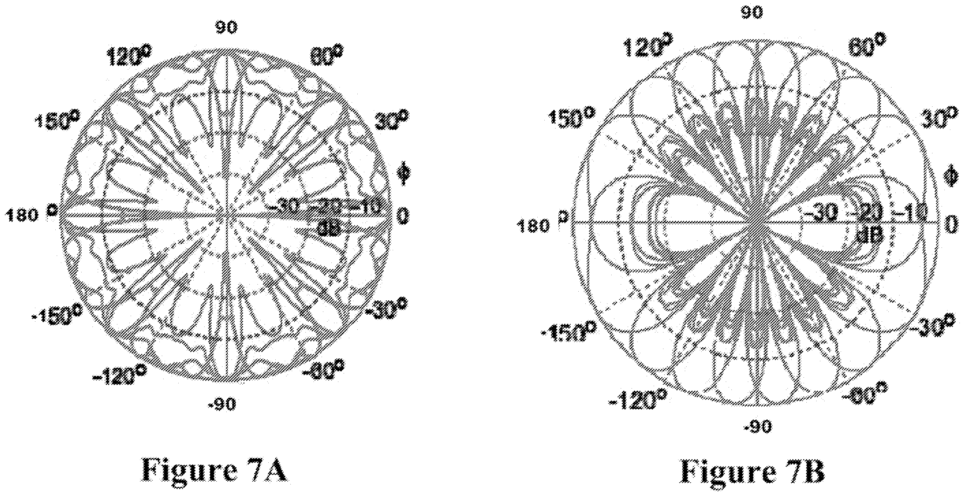

Figure 7A shows the uniform circular array response that results when the columns of the DFT matrix are used to provide the possible excitation weights that can be applied in a uniform circular array of N=8 elements. For comparison, Figure 7B depicts the response of a uniform linear array to the same excitation weights shown in Figure 7A. The comparison of the responses shown in Figures 7A and 7B clearly shows that the DFT codebook was designed for the uniform linear array. The response of the uniform circular array is irregular and disordered, whereas the response of the uniform linear array is very regular and well ordered.

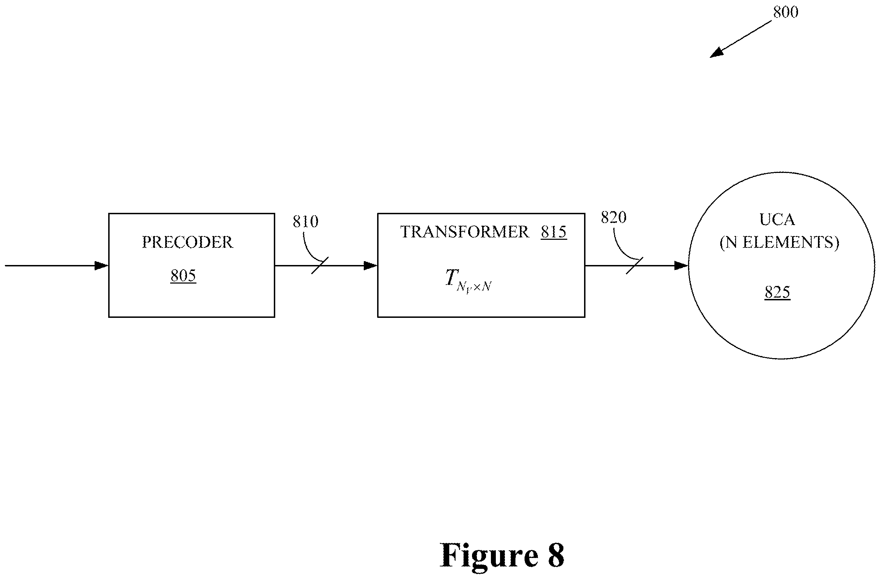

Figure 8 conceptually illustrates one exemplary embodiment of a transmit chain 800 for precoding and transforming signals for transmission. In the illustrated embodiment, transmit signals are generated assuming a uniform linear array and then provided to a precoder 805 for precoding. For example, the precoder 805 may precode the signal using DFT precoding matrices generated assuming a uniform linear array that has $N_v$ antenna elements. The precoded signals may then be output to $N_v$ virtual ports 810 corresponding to the assumed $N_v$ antenna elements in the assumed uniform linear array. The virtual ports 810 provide an interface to a transformer 815. In the illustrated embodiment, the transformer 815 implements a Davies transformation, which is a linear transformation method that transforms a UCA steering vector into a ULA vector having a Vandermonde structure. The Davies transformation can be used for supporting closed-loop precoded transmission with existing codebooks, as well as for long-term beamsteering transmissions. For beamsteering applications, the system on chip (SoC) baseband calculations may not need to be adapted to the UCA geometry and ULA DoA estimation methods can readily be used for UE-specific beam steering and null steering.

In the illustrated embodiment, the transformer 815 performs the transformation (T) after the standardized precoding stage, at least in part to support the application of CL-MIMO. For example, the transformer 815 may transform the $N_V \leq N$ virtual array inputs to N physical array outputs or ports 820 corresponding to antenna elements in the uniform circular array 825. Effectively, the uniform circular array 825 appears as a ULA to the precoder 805. Implementing a transformer 815 may therefore allow vendors to offer a UCA MIMO solution without any standards changes or changes to existing base stations or precoders. User equipment may also reuse existing unitary codebooks such as the codebooks standardized in LTE and UMTS for sending Channel State Information (CSI) in CL-MIMO transmission modes.

The Davies Transformation (DT) applies a synthesis procedure to the excitation weight and the corresponding pattern $F(\theta,\phi)$ from its Fourier components. The UCA aperture distribution may then be steered using excitation weights called phase-mode excitations. The form of the Davies transformation depends on the structure of the antenna 825. In one embodiment, the antenna 825 may have a continuous circular (or ring) aperture. The phase-mode excitations for a continuous circular aperture may be defined as follows.

**Davies Transform (DT)**

The Davies transformation is $T = \Lambda F$ where the individual matrices J and F are defined as,

$$\Lambda = diag\left\{\frac{1}{\sqrt{N}j^m J_m(\kappa a \sin\theta)}\right\}, m = -\mu, \ldots, 0, \ldots, \mu$$

$$F = \frac{1}{\sqrt{N}}\begin{bmatrix} 1 & \omega^{-\mu} & \omega^{-2\mu} & & \omega^{-(N-1)\mu} \\ \vdots & \vdots & & \cdots & \vdots \\ 1 & \omega^{-1} & \omega^{-2} & & \omega^{-(N-1)} \\ 1 & 1 & 1 & \ldots & 1 \\ 1 & \omega^{1} & \omega^{2} & & \omega^{(N-1)} \\ \vdots & \vdots & & \cdots & \vdots \\ 1 & \omega^{\mu} & \omega^{2\mu} & & \omega^{(N-1)\mu} \end{bmatrix}$$

Where:

$J_m(x)$ denotes the first-kind Bessel function of order m.

$$\omega = e^{j\frac{2\pi}{N}}$$

$\mu$ = maximum order of phase-mode

The continuous circular aperture may be defined as a continuous distribution of "elements" located at $a_{\rho c}$ = ($a$ cos $\phi_c$, $a$ sin ($\phi_c$, 0), where $\phi_c$ is relative to the x-axis and is a continuous angle. In the illustrated embodiment, each of the elements in the continuous distribution has an isotropic antenna pattern $f(\theta,\phi)$ = 1.0. However, persons of ordinary skill in the art having benefit of the present disclosure should appreciate that alternative embodiments may use other antenna patterns.

The continuous circular aperture may be used for beamforming. For example, excitation weights can be determined for beamforming towards a target point located at $(\frac{\pi}{2}, \phi_T)$. The required excitation weight can be determined, *e.g.,* by observing the expression of the pattern of the discrete UCA, to be given by the expression:

$$w(\phi_c) = e^{-j\kappa a \cos(\phi_T - \phi_c)}$$

The far-field radiation pattern in this case is given by the expression:

$$F_c\left(\frac{\pi}{2}, \phi\right) = \frac{1}{2\pi}\int_0^{2\pi} w(\phi_c)e^{j\kappa a \cos(\phi - \phi_c)}\, d\phi_c = J_0\left(\kappa a \sin\frac{\phi}{2}\right)$$

The zero order Bessel function $J_0$ may represent the large sidelobe behavior, as seen by the empirical polar plots shown in Figures 6A and 6B. In one embodiment, sidelobe levels can be controlled with amplitude tapering. The vertical pattern may also have a Bessel-type behavior, although the beamwidth of the vertical pattern may be much larger than the beamwidth of the equivalent horizontal pattern.

The excitation function $w(\phi_c)$ for the continuous circular aperture may be a periodic function of the angle $\phi_c$ with period $2\pi$ and therefore can be expressed as a finite summation of its complex Fourier components:

$$w(\phi_c) = \sum_{m=-\mu}^{\mu} C_m e^{jm\phi_c}, \qquad \phi_c \in [0, 2\pi]$$

The above expression, the variable $C_m$ represents the complex coefficient of the m-th spatial harmonic and in the illustrated embodiment there are $2\mu + 1$ harmonics that can represent the excitation weight. Each of the spatial harmonics may be called a phase mode of the array excitation. The *m*-th phase mode corresponds to a constant-amplitude with m-cycles of linear (in angle) phase change around the continuous circular array, so for each 1 degree of angle change around the continuous circular array there are m degrees of phase change for the signals transmitted from the corresponding "element." A negative phase mode indicates a phase change in the opposite direction. The radiation pattern from the continuous circular array when the m-th phase mode is exciting the array is an integral, as opposed to a summation in the case of a discrete element UCA, which may be given by the expression:

$$F_c^m(\theta, \phi) = \frac{1}{2\pi} \int_0^{2\pi} w^{(m)}(\phi_c) e^{-j\kappa a \sin\theta \cos(\phi - \phi_c)} \, d\phi_c = C_m j^m J_m(\kappa a \sin\theta) e^{jm\phi}$$

In the above expression, the function $J_m$ is the Bessel function of the first kind of order m. The above expression shows that applying the excitation weight $w^{(m)}(\phi_c) = C_m e^{jm\phi_c}$ causes the resultant pattern $F_c^m(\theta, \phi)$ to inherit its azimuth variation as indicated by the presence of the term $e^{jm\phi}$. Thus, the desired beamforming pattern towards a particular azimuth direction may be synthesized by the $2\mu + 1$ far-field phase modes $F_c^m(\theta, \phi)$. In one embodiment, the radiation pattern of the continuous circular array $F_c(\theta, \phi)$ can be decomposed into its Fourier components and each component may be separately excited.

Not all modes may offer in general the same strength in the pattern - each excited mode can contribute with an amplitude $C_m j^m J_m(\kappa a \sin\theta)$ - which may introduce frequency or elevation angle dependence in the pattern. In one embodiment, the value of $\mu$ may be selected to satisfy the expression:

$$\mu \approx \kappa a.$$

This selection may be justified by looking at the so-called *visibility region* of the continuous circular array, which may be the same as the visibility region of a ULA. The visibility region of a continuous circular array may be defined based on the phase term of the steering vector $a_{CUCA}(\theta, \phi) = e^{-j\kappa a \sin\theta \cos(\phi - \phi_c)}$ and for different values of $\theta \in \left[-\frac{\pi}{2}, \frac{\pi}{2}\right]$ and $\phi - \phi_c \in [0, 2\pi]$. This gives a continuous circular array visibility region of $[0, \kappa a]$ that depends on the radius of the array.

One exemplary embodiment of a phase-mode excitation for beamsteering of a continuous circular array with $a = \lambda$ is represented by:

$$C_m = \frac{1}{j^m J_m(\kappa a \sin\theta)}$$

This expression indicates that all the modes are excited to the same amplitude in the far-field pattern and the resultant pattern can be represented by the expression:

$$F_c(\theta, \phi) = \sum_{m=-\mu}^{\mu} C_m j^m J_m(\kappa a \sin\theta) e^{jm\phi} = \sum_{m=-\mu}^{\mu} e^{jm\phi} = \frac{\sin\mu\phi}{\sin\phi}$$

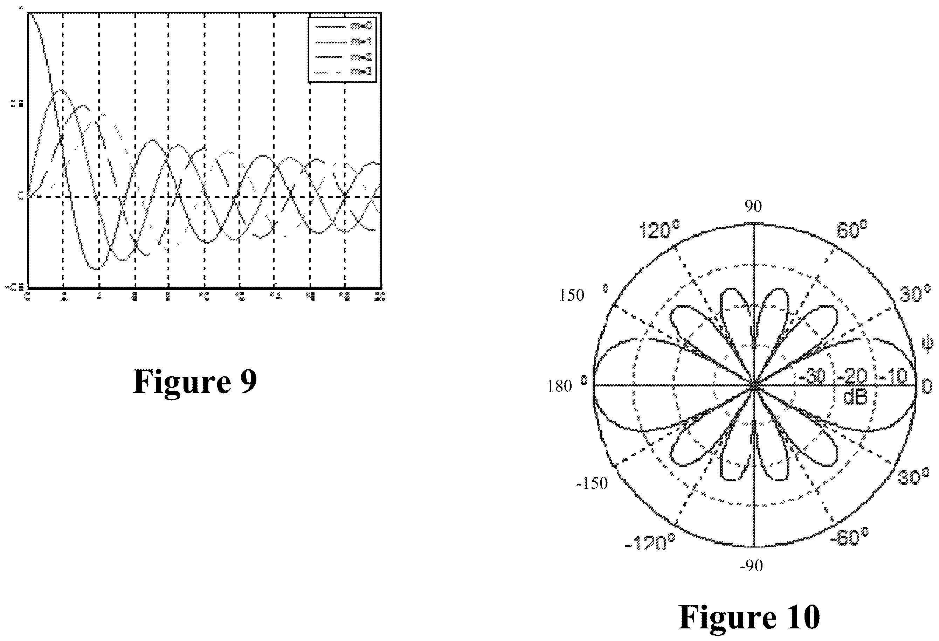

Since the radius of the array is $a = \lambda$, the visibility region is $[-2\pi, 2\pi]$ and the highest order phase mode that can excite this specific ring aperture is $\mu = [2\pi] = 6$. As shown in Figure 9, as the mode increases, the Bessel function is having less and less impact in the visibility region. The first peak of phase-mode 6 for example appears past the $x = 2\pi$ upper limit of the visibility region while $J_6(x)$ returns negligible values for $x \leq 4$. Consequently, an excitation weight $w^{(6)}(\phi_c) = e^{j6\phi_c}$ makes a negligible contribution to most angles in the pattern. The array pattern $F_c(\theta, \phi)$ expression is shown in Figure 10 and resembles the corresponding expression of a ULA array with $\mu$ elements. The comparison in this case is to a ULA that is positioned along the x-axis, the first element being located at the origin of the coordinate system and the spacing between elements is $\frac{\lambda}{2}$.

In the illustrated embodiment, reducing the radius $\alpha$ results in smaller $\mu$ and the number of phase modes that can be excited is limited. This can be easily be explained by the behavior of $J_m(\kappa\alpha)$ - when $m > \kappa\alpha$, the function returns negligible values. In some embodiments, continuous circular arrays with appreciable radii may have a limited number of useful phase modes if $J_m(\kappa\alpha)$ is close to one of its nulls. For example, an infinitesimal arc of the array located at $\phi_{c_0}$ generates a far-field phase when the array is excited by the phase mode m that may be represented by the expression:

$$\kappa\alpha \sin\theta_T \cos(\phi_T - \phi_{c_0}) + m\phi_{c_0}$$

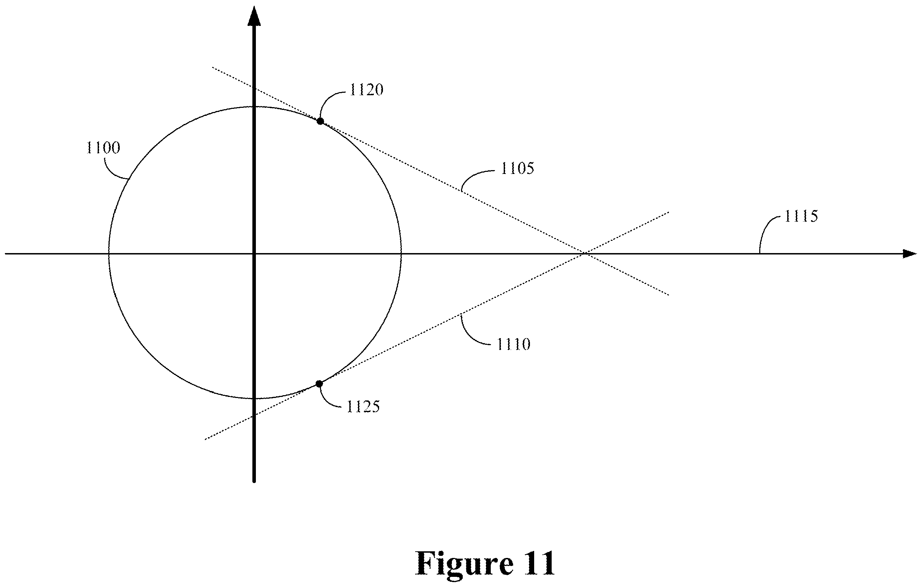

If the target direction is given by $(\theta_T, \phi_T) = \left(\frac{\pi}{2}, 0\right)$ then the maximum contribution to the far field comes from those parts of the aperture that co-phase at the target angle. Figure 11 conceptually illustrates one exemplary embodiment of the continuous circular array 1100. There are two points 1120, 1125 on the circle 1100 where transmitted plane waves 1105, 1110 intersect at the line 1115 that defines the direction of the transmitted mode (*e.g.,* the spatial harmonic). The points 1120, 1125 are located at angles $\phi_{c_0}$ and -$\phi_{c_0}$.

In another embodiment, the uniform cylindrical array 825 may be formed using N discrete antenna elements, *e.g.,* as depicted in Figure 5. For example, the uniform cylindrical array 825 may be formed of N isotropic elements, in which case the array 825 may be regarded as an array that resulted from uniformly sampling a continuous circular array. The phase mode excitation principle applies to this embodiment but the maximum phase mode order $\mu$ that can be excited may depend on the relationship of the sampling interval (inter-element spacing) to the Nyquist interval. For example, the phase mode order $\mu$ should be $\mu \approx \kappa\alpha$ and a minimum of $\lfloor 2\kappa\alpha + 1 \rfloor$ elements may be selected. In this case, the spacing between the elements of the cylindrical antenna array 825 may be $\leq \lambda/2$. To satisfy this requirement, the relationship between radius and number of elements N may be given by the expression:

$$a = \frac{1}{4\sin\left(\frac{\pi}{N}\right)}\lambda$$

For $N = 8 \overset{\Delta}{\to} a = 0.65\lambda.$

The m-th phase mode excitation weight for the n-th element may be given by the expression:

$$w_n^{(m)}(\phi_n) = C_m e^{jm\phi_n} S(\phi_n)$$

In this expression, the function $S(\phi_n)$ is a sampling function corresponding to a series of unit impulse functions (*e.g.,* Dirac functions) at the element coordinates. The sampling function may then be expressed as an infinite summation of the its spatial spectral components:

$$S(\phi_n) = \sum_{q=-\infty}^{\infty} e^{jqN\phi_n} = 1 + \sum_{q=1}^{\infty} e^{jqN\phi_n} + \sum_{q=1}^{\infty} e^{-jqN\phi_n}$$

The excitation weight in the last expression may be given by:

$$w_n^{(m)}(\phi_n) = C_m e^{jm\phi_n} S(\phi_n) = C_m e^{jm\phi_n} + C_m \sum_{q=1}^{\infty} \left( e^{j(qN+m)\phi_n} + e^{-j(qN-m)\phi_n} \right)$$

The infinite sum expression of the UCA excitation weight may be a consequence of the sampling in the same sense that any sampled function has spectral components that span into infinity. The far-field pattern expression for an antenna pattern of $f(\theta, \phi) = 1.0$ may then be given by:

$$F^m(\theta, \phi) = \sum_{n=0}^{N-1} w_n^{(m)}(\phi_n)e^{j\kappa a \sin\theta \cos(\phi-\phi_n)} =$$

$$= C_m j^m J_m(\kappa a \sin\theta)e^{jm\phi} + \sum_{q=1}^{\infty} C_m j^{-g} J_g(\kappa a \sin\theta)e^{jg\phi} + \sum_{q=1}^{\infty} C_m j^{-h} J_h(\kappa a \sin\theta)e^{jh\phi}$$

where $g = Nq - m, h = Nq + m$. The first term in the above expression represents the desired far-field phase mode pattern. This term was the only term present in the expression for the far-field radiation pattern of the continuous circular array. The additional terms represent higher order distortion modes. Out of these higher order terms, the very first ($q = 1$) pair has the higher impact and its amplitude follows the Bessel functions of order N-|m|. Specifically, the $J_{N-\mu}$ amongst all m is the most problematic as it is evident by the behavior of $J_{\lfloor 2\kappa a-\kappa a \rfloor}(\kappa a) = J_{\lfloor \kappa a \rfloor}(\kappa a)$ that is increasing over the visibility region [0, $\kappa a$]. In one embodiment, protection against the distortion represented by this term may be provided by increasing the number of elements N such that $J_{N-\mu}(x)$ is negligible.

As discussed herein, a cylindrical multimode array may be represented by a continuous current sheet model and summation of pattern modes of the form $e^{jk\varphi}$. The summation may be achieved with a continuous current sheet or it could be approximated with a discrete cylindrical N-element array. For discrete arrays, as many current modes can be established as there are antenna elements. While far field pattern of a cylindrical array can be described in terms of cylindrical modes:

$$E(\varphi) = \sum_n C_n e^{jn\varphi}$$

the far field pattern of a linear array of isotropic sources with inter-element distance (IED) $d$ may be given by:

$$E(u) = \sum_n A_n e^{jnu}$$

$$u = kd \sin(\varphi)$$

where $A_n$ is current on element $n$ and $\varphi$ is angle relative to array boresight. The above equations show the similarity of the patterns of the circular current sheet and the linear array, with the role of the element in the linear array taken by the current mode in the circular array. The phases of linear array elements and cylindrical array modes may be bound by linear phase progression at a particular azimuth angle and it can be shown that both configurations produce a sin(nX)/sin(X) type far field pattern if phased appropriately. Consequently, cylindrical modes may be equated with virtual linear array elements assumed by some embodiments of beamforming and precoding techniques. The cylindrical modes may also be considered as virtual elements.

Embodiments of the transmit chain 800 may be configured to perform the following:

1. An NxN Butler-type matrix 815 with phase increment of $2\pi$/N between the ports 810 of the base station and the ports 820 of the N-element cylindrical antenna array 825 excites all cylindrical modes available for the array 825.
2. Using a subset of these modes (or a subset of Butler matrix ports 810) a directional beam can be created in a set direction.
3. Applying DFT steering weights to this subset of ports 810 we can steer the beam continuously over 360° or switch it to any of N positions over 360°.
4. If per-antenna pilots are applied to the selected subset of Butler matrix ports 810, user equipment can use DFT precoding matrix (e.g., R8 or R10 of LTE) to determine a valid PMI
5. Pilots may be applied to the Butler matrix ports 810 with equal magnitude in order to ensure reliable channel estimation. Traffic can be tapered for better sidelobe performance. Care has to be taken to ensure negligible pilot traffic mismatch.

The cylindrical modes of the array 825 may be selected based upon a degree of variation of these modes. For a discrete N-element array not all of the cylindrical modes have far-field patterns that fit the $e^{jk\varphi}$ form and higher order modes may deviate significantly from the profile $e^{jk\varphi}$. For example, in an N-element array, the highest order mode (N/2 for even N or (N+1)/2 for odd N) has an element-to-element phase variation equal or close to $\pi$. By symmetry, its pattern must be multi-lobed with N nulls and **N** peaks and therefore it cannot be used as a uniform mode because it has a relatively large degree of variation in amplitude with azimuth.

The degree of variation of the different cylindrical modes may be determined based on the configuration of the array 825. In one embodiment, the array 825 is a circular array of radius R with elements equally spaced at $a_j = j2\pi/N$, where j = 1,2,...,N. If the element pattern is $A_e(\varphi - a_j)$ and the current on the element is $A_j e^{j\psi_j}$, then the radiation pattern of the array 825 is given by:

$$E(\varphi) = \sum_{n=1}^{N} A_n e^{j\psi_n} A_e(\varphi - \alpha_n) e^{j(2\pi R/\lambda)\cos(\varphi - \alpha_n)} \qquad (3)$$

In one embodiment, an approximate pattern of the dipole in front of the conducting cylinder that represents the antenna element is given by:

$$A_0(\varphi) = 1/2\big(1 + \cos(\varphi)\big)$$

and has a 3dB beamwidth of 130deg. In alternative embodiments, the antenna element pattern can be made narrower by shaping the element reflector. For example, simulated pattern beamwidths of 90° and 75° have been achieved by reflector shaping. Generic element patterns with appropriate beamwidth based on the original dipole pattern $A_0$ are used for this assessment. For example, $A_1(\varphi) = A_0(\varphi)^2$ provides 90° beamwidth and $A_2(\varphi) = A_0(\varphi)^3$ provides 76° beamwidth.

Mode patterns of the array 825 may be calculated for exemplary embodiment using the above equations with a 90° element pattern. The radiation pattern for the K-th mode may be calculated using a current distribution given by $A_n = 1$, $\psi_n = 2\pi Kn/N$ for inter-element distances 0.5λ and 0.4λ:

$$E_m(\varphi) = \sum_{n=1}^{N} e^{jm\frac{2\pi n}{N}} A_e\left(\varphi - \frac{2\pi n}{N}\right) e^{j(2\pi R/\lambda)\cos\left(\varphi - \frac{2\pi n}{N}\right)} \quad (4)$$

Table 1 lists the absolute variation of the mode magnitude over azimuth (max-min) in dB for one embodiment that assumes a 90° element pattern: $A_1(\varphi) = A_0(\varphi)^2$. Uniform modes that exhibit a degree of variation with azimuth that is less than 2dB are highlighted.

| N elem | 8 | 8 | 9 | 9 | 10 | 10 | 12 | 12 |
|---|---|---|---|---|---|---|---|---|
| distance | 0.50 | 0.40 | 0.50 | 0.40 | 0.50 | 0.40 | 0.50 | 0.40 |
| mode 0 | 0.38 | 0.00 | 0.20 | 0.09 | 0.28 | 0.04 | 0.06 | 0.01 |
| mode 1 | 1.00 | 0.32 | 0.63 | 0.19 | 0,48 | 0.10 | 0.17 | 0.03 |
| mode 2 | 2.71 | 1.24 | 1.78 | 0.66 | 1.21 | 0.36 | 0.53 | 0.11 |
| mode 3 | 7.17 | 4.71 | 4.55 | 2.41 | 3.00 | 1.27 | 1.39 | 0.36 |
| mode 4 | 29.14 | 29.14 | 12.98 | 9.91 | 7.59 | 4.76 | 3.28 | 1.28 |
| mode 5 | 7.17 | 4.71 | 12.98 | 9.91 | 318.06 | 313.08 | 8.01 | 4.78 |
| mode 6 | 2.71 | 1.24 | 4.55 | 2.41 | 7.59 | 4.76 | 313.08 | 316.75 |
| mode 7 | 1.00 | 0.32 | 1.78 | 0.66 | 3.00 | 1.27 | 8.01 | 4.78 |
| mode 8 | | | 0.63 | 0.19 | 1.21 | 0.36 | 3.28 | 1.28 |
| mode 9 | | | | | 0.48 | 0.10 | 1.39 | 0.36 |
| mode 10 | | | | | | | 0.53 | 0.11 |
| mode 11 | | | | | | | 0.17 | 0.03 |

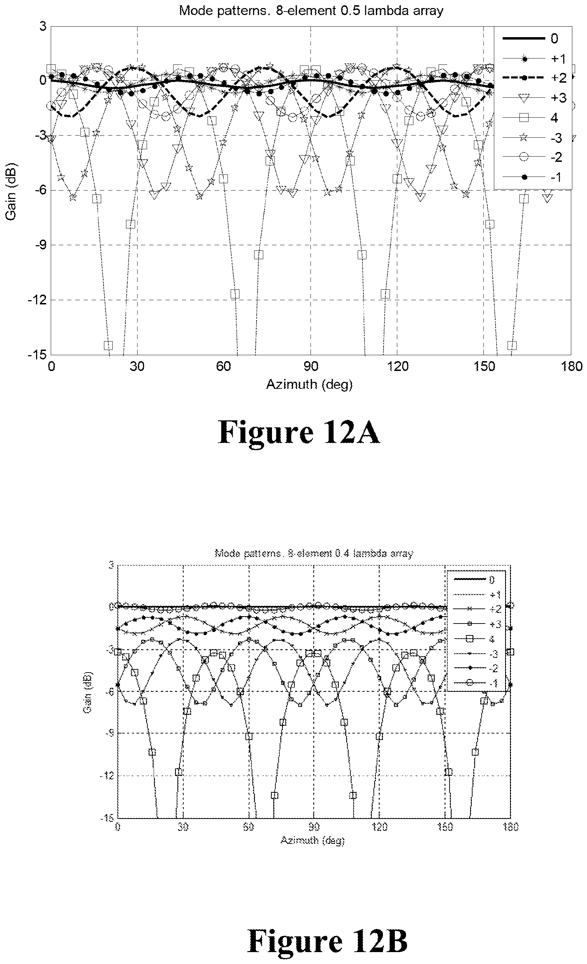

Examples of mode patterns are shown in Figures 12A and 12B. In the illustrated embodiment, lower order modes have an approximately constant magnitude and follow the $e^{jk\varphi}$ pattern, while higher order modes progressively deviate from the $e^{jk\varphi}$ pattern. Modes with large degrees of variation in azimuth may not be suitable for beamforming because these modes may contribute to sidelobe increase. Modes with large degrees of variation in azimuth may also not be suitable for closed loop schemes where per port reference signals are employed. In the illustrated embodiment, mean mode magnitudes stay almost constant as a function of mode number when $d=0.55$. Smaller inter-element distances may result in monotonic decrease in mode magnitude with mode number for higher modes.

The transmit chain 800 may select usable modes based upon the degree of variation with azimuth. The number of usable modes may be proportional to the number of elements in the array 825 and inversely proportional to the inter-element distance between antenna elements of the array and 25. In one embodiment, usable modes may be modes that have a degree of variation that is less than a mode variation threshold of 2dB. Using this threshold, Table 1 indicates that an 8-element array with 0.5λ has 3 uniform modes, 5 modes with 0.4λ, etc. Table 1 indicates that a 12-element array has 7 useful modes with 0.5λ and 9 useful modes with 0.4λ inter-element distance.

Beamforming may also be performed using the transmit chain 800. In one embodiment, adding modes that are phased in such a way that they add in phase at a particular angle (and out of phase at other angles) may create directional pattern that results from the constructive and destructive interference of the modes. Normalized beam patterns formed with different number of modes are shown on Figure 2 and their beamwidth on Figure 3. A full set of usable modes for a particular number of elements is odd [0, +/-1, +/-2, +/-3...]. In one embodiment, an even number of modes, *e.g.* 4 and 8, may be selected to fit the number of output ports assumed for generating DFT precoding sets of R8 and R10. For example, an even set of modes can be chosen as a subset of a full set by removing the highest negative (or positive) mode from the full set, *e.g.* if the full set of usable modes is [-3 -2 -1 0 1 2 3] then an even set may be [-2 -1 0 1 2 3]. The even subset of modes is asymmetrical, which leads to minor pattern asymmetry that may be more pronounced when the number of array elements is small. The price to pay for omnidirectionality of phase modes, which makes them ideal choice for "per element" pilots in a circular array, is relatively wide beams. Four modes that correspond to R8 codebook may produce an 80° beamwidth, similar to a single element pattern. Eight modes may produce a 40° beamwidth from an array 825 that includes 14-16 elements.

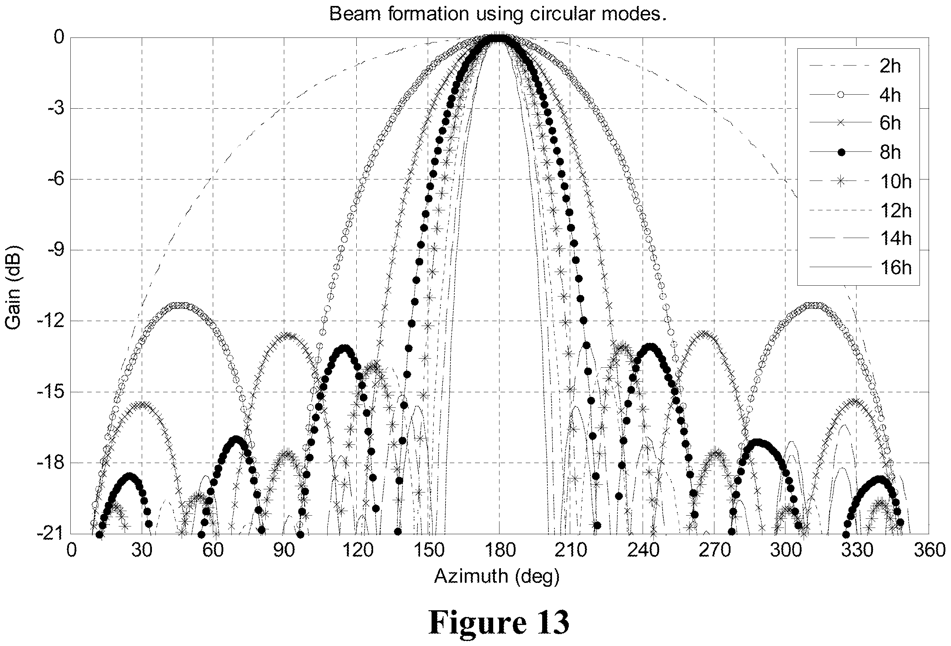

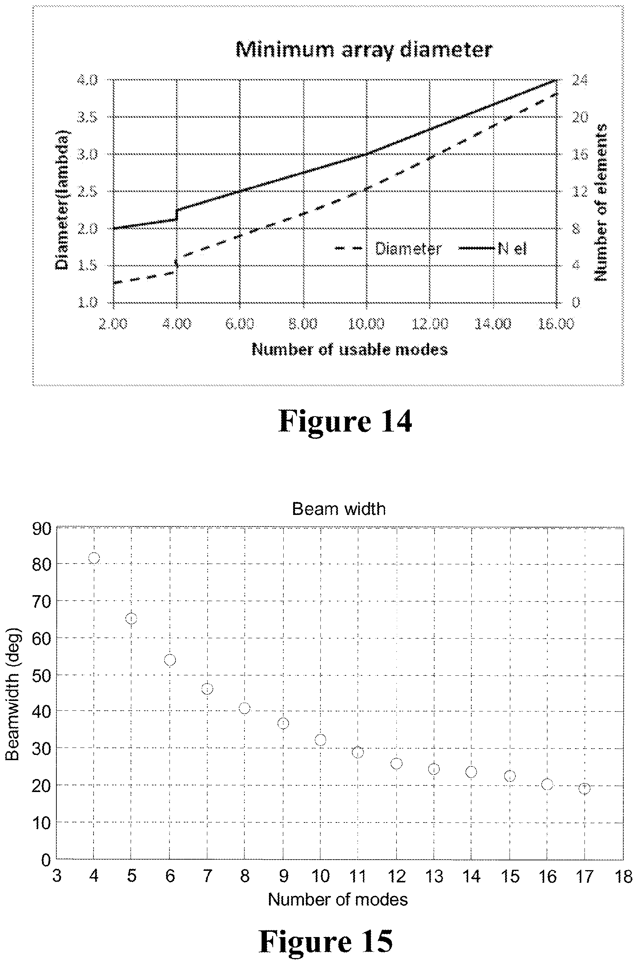

Figure 13 shows beam formation using an even number of circular modes. In the illustrated embodiment, beam formation using 4, 8, and 16 mode patterns are highlighted. Figure 14 shows the beamwidth of a directional pattern formed with circular modes as a function of the number of modes included. Figure 15 shows a minimum number of elements and array diameter used to generate a particular number of usable modes.

Another interesting aspect of mode behavior is the relative mode magnitude or gain in azimuthal plane as a function of mode number. It would be desirable in the context of CL MIMO application of cylindrical array to have modes of equal magnitudes in addition to the low ripple in azimuth. Mode magnitude may be defined as:

$$P_m = 20\log\left(\frac{1}{2\pi}\int\left|E_m(\varphi)\right|\right)$$

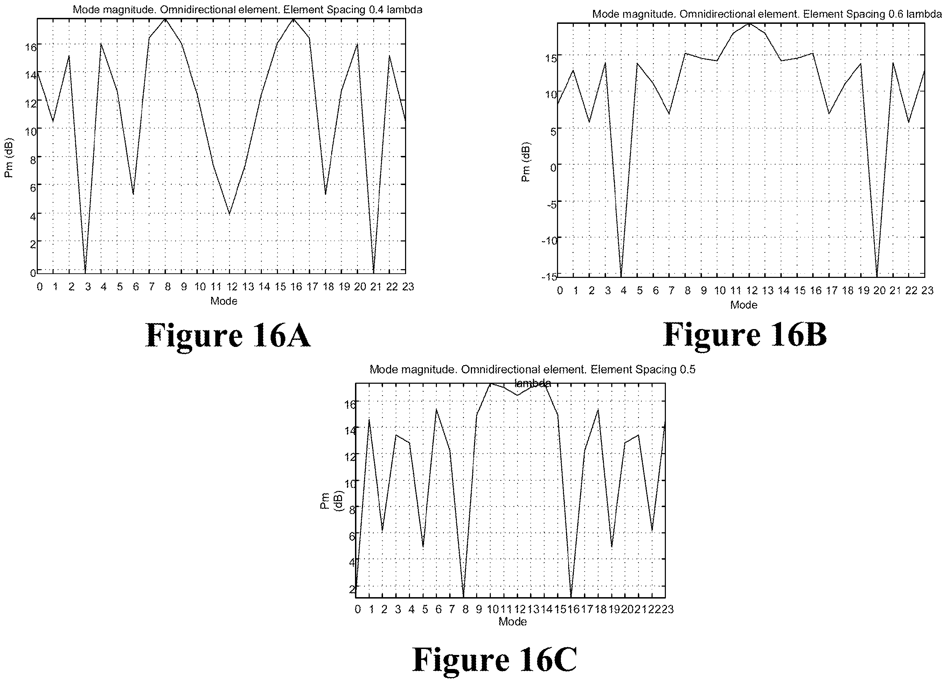

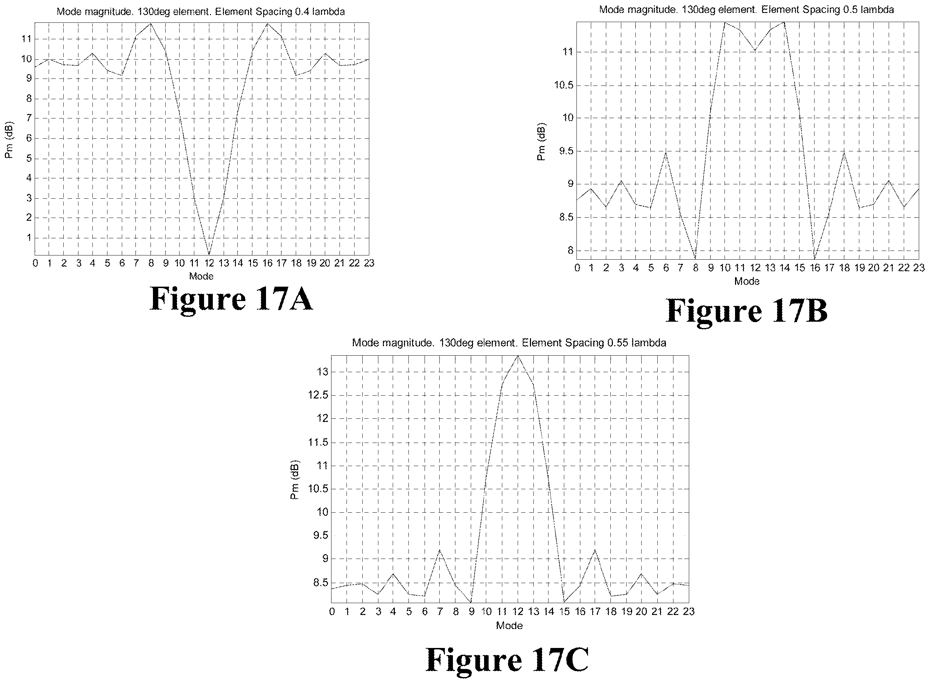

Mode magnitudes are shown for different embodiments in Figures 16A-C and 17A-C. Figure 16A shows the mode magnitude for 0.4 λ and omnidirectional elements, Figure 16B shows the mode magnitude for 0.5 λ and omnidirectional elements, and Figure 16C shows the mode magnitude for 0.55 λ and omnidirectional elements. Figure 17A shows the mode magnitude for 0.4 λ and 130° beamwidth elements, Figure 17B shows the mode magnitude for 0.5 λ and 130° beamwidth elements, and Figure 17C shows the mode magnitude for 0.55 λ and 130° beamwidth elements. In the illustrated embodiments, the spread of $P_m$ for different $m$ in case of omnidirectional antennas may be large. On the contrary, for a narrow beam element, the $P_m$ variation should be small except for the higher order modes.

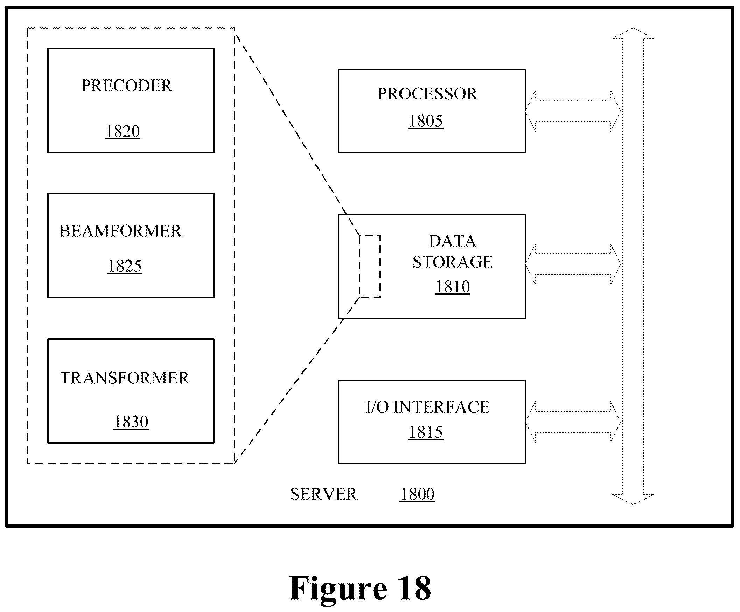

Figure 18 conceptually illustrates one exemplary embodiment of a base station 800 that may be used to store portions of functionality used to implement a precoder, beamformer, or transformer such as described herein. In the illustrated embodiment, the base station 1800 includes a processor 1805, data storage 1810, and an input/output (I/O) interface 1815. The processor 1805 is configured to control operation of the base station 1800, *e.g.,* using data or instructions stored in the data storage 1810 or at other locations. Embodiments of the operations that may be performed by the base station 1800 are described herein in conjunction with Figures 1-17. In one embodiment, the data storage 1810 stores information 1820 that represents or can be used to implement one or more precoders, information 1825 that represents or can be used to implement one or more beamformers, or information 1830 that represents or can be used to implement one or more transformers. Persons of ordinary skill in the art having benefit of the present disclosure should therefore appreciate that different embodiments of the techniques or devices described herein may be implemented in software, firmware, hardware, or combinations thereof. When processor-executable programs such as the transformer 1830 are implemented on the processor 1805, the program code segments combine with the processor 1805 to provide a unique device that operates analogously to specific logic circuits.

Portions of the disclosed subject matter and corresponding detailed description are presented in terms of software, or algorithms and symbolic representations of operations on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the disclosed subject matter are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The disclosed subject matter is not limited by these aspects of any given implementation.

The particular embodiments disclosed above are illustrative only, as the disclosed subject matter may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

**Claims**

1.    A method, comprising:

selecting a subset of modes of a first antenna array configuration based on a degree of variation of each mode with azimuth;
mapping (325) each of a plurality of first ports (310) to one of a plurality of second ports (315) associated with one of the subset or modes, **characterised in that** each of the first ports (310) is associated with a mode of a second antenna array configuration; and
transforming signals conveyed between the second ports (315) and a corresponding plurality of third ports, wherein each second port is associated with one of the modes of the first antenna array configuration and wherein each third port is configurable to be communicatively coupled to one of a plurality of antennas deployed in the first antenna array configuration.

2.    The method of claim 1, wherein transforming the signals comprises applying a Butler matrix transformation with predetermined phase increment between the second ports and the third ports, wherein the Butler matrix transformation is configurable to excite the modes of the first antenna array configuration in response to signals applied at the second ports.

3.    The method of claim 1, wherein the first antenna array configuration is a uniform circular array or a uniform cylindrical array, and wherein the second antenna array configuration is a uniform linear array.

4.    The method of claim 1, wherein selecting the subset of modes comprises selecting modes of the first antenna array configuration that have a degree of variation with azimuth that is less than a threshold value of the degree of variation with azimuth.

5.    The method of claim 4, wherein selecting the subset of modes comprises selecting a number of modes of the first antenna array configuration that is equal to the number of first ports.

**6.** The method of claim 1, wherein mapping each of the plurality of first ports to one of the plurality of second ports comprises mapping each of a plurality of pilot signals to a different one of the second ports associated with the subset of modes of the first antenna array configuration.

**7.** The method of claim 6, comprising providing signals to the plurality of antennas deployed in the first antenna array configuration so that each of the plurality of pilot signals is transmitted using its associated one of the subset of modes.

**8.** The method of claim 1, wherein mapping the signals comprises mapping beamformed or precoded signals to the first ports corresponding to the selected subset of modes of the second antenna array configuration for transmission by the antennas in the second antenna array configuration.

**9.** The method of claim 1, comprising mapping uplink signals received by the antennas of the second antenna array configuration from the third ports to the second ports.

**10.** An apparatus, comprising:

means for selecting a subset of modes of a first antenna array configuration based on a degree of variation of each mode with azimuth;
means for mapping (325) each of a plurality of first ports (310) to one of a plurality of second ports (315) associated with one of the subset of modes, **characterised in that** each of the first ports (310) is associated with a mode of a second antenna array configuration; and
means for transforming signals conveyed between the second ports (315) and a corresponding plurality of third ports, wherein each second port is associated with one of the modes of the first antenna array configuration and wherein each third port is configurable to be communicatively coupled to one of a plurality of antennas deployed in the first antenna array configuration.

**Patentansprüche**

**1.** Verfahren, umfassend:

Auswählen einer Untergruppe von Modi einer ersten Antennenarraykonfiguration aufbauend auf einem Variationsgrad jedes Modus mit dem Azimut;
Zuordnen (325) eines jeden einer Vielzahl von ersten Ports (310) zu einem von einer Vielzahl von zweiten Ports (315), die einem der Untergruppe von Modi zugeordnet sind, **dadurch gekennzeichnet, dass** jeder der ersten Ports (310) einem Modus einer zweiten Antennenarraykonfiguration zugeordnet wird; und
Transformieren von Signalen, die zwischen den zweiten Ports (315) und einer entsprechenden Vielzahl von dritten Ports übermittelt werden, wobei jeder zweite Port einem der Modi der ersten Antennenarraykonfiguration zugeordnet wird und wobei jeder dritte Port so konfigurierbar ist, dass er kommunizierend an eine von einer Vielzahl von Antennen gekoppelt wird, die in der ersten Antennenarraykonfiguration eingesetzt werden.

**2.** Verfahren nach Anspruch 1, wobei das Transformieren der Signale das Anwenden einer Butler-Matrixtransformation mit vorgegebener Phasenerhöhung zwischen den zweiten Ports und den dritten Ports umfasst, wobei die Butler-Matrixtransformation dazu konfigurierbar ist, die Modi der ersten Antennenarraykonfiguration in Reaktion Signale anzuregen, die an die zweiten Ports angelegt werden.

**3.** Verfahren nach Anspruch 1, wobei die erste Antennenarraykonfiguration ein gleichmäßiges kreisförmiges Array oder ein gleichmäßiges zylinderförmiges Array ist und wobei die zweite Antennenarraykonfiguration ein gleichmäßiges lineares Array ist.

**4.** Verfahren nach Anspruch 1, wobei das Auswählen einer Untergruppe von Modi das Auswählen von Modi der ersten Antennenarraykonfiguration umfasst, die einen Variationsgrad mit dem Azimut aufweisen, die kleiner als ein Schwellenwert des Variationsgrads mit dem Azimut ist.

**5.** Verfahren nach Anspruch 4, wobei das Auswählen einer Untergruppe von Modi das Auswählen einer Anzahl von Modi der ersten Antennenarraykonfiguration umfasst, die gleich der Anzahl erster Ports ist.

**6.** Verfahren nach Anspruch 1, wobei das Zuordnen eines jeden einer Vielzahl von ersten Ports zu einem von einer Vielzahl von zweiten Ports das Zuordnen eines jeden einer Vielzahl von Pilotsignalen zu einem verschiedenen der zweiten Ports umfasst, der der Untergruppe von Modi der ersten Antennenarraykonfiguration zugehörig ist.

7. Verfahren nach Anspruch 6, umfassend Bereitstellen von Signalen an die Vielzahl von Antennen, die in der ersten Antennenarraykonfiguration eingesetzt werden, so dass ein jedes der Vielzahl von Pilotsignalen unter Verwendung seines zugehörigen der Vielzahl von Modi übertragen wird.

8. Verfahren nach Anspruch 1, wobei das Zuordnen der Signale das Zuordnen strahlgeformter oder vorcodierter Signale zu den ersten Ports, die der ausgewählten Untergruppe von Modi der zweiten Antennenarraykonfiguration entsprechen, zur Übertragung durch die Antennen in der zweiten Antennenarraykonfiguration umfasst.

9. Verfahren nach Anspruch 1, umfassend Zuordnen von Uplink-Signalen, die von den Antennen der zweiten Antennenarraykonfiguration empfangen werden, von den dritten Ports zu den zweiten Ports.

10. Vorrichtung, umfassend:

ein Mittel zum Auswählen einer Untergruppe von Modi einer ersten Antennenarraykonfiguration aufbauend auf einem Variationsgrad jedes Modus mit dem Azimut;
ein Mittel zum Zuordnen (325) eines jeden einer Vielzahl von ersten Ports (310) zu einem von einer Vielzahl von zweiten Ports (315), die einem der Untergruppe von Modi zugeordnet sind, **dadurch gekennzeichnet, dass** jeder der ersten Ports (310) einem Modus einer zweiten Antennenarraykonfiguration zugeordnet ist; und
ein Mittel zum Transformieren von Signalen, die zwischen den zweiten Ports (315) und einer entsprechenden Vielzahl von dritten Ports übermittelt werden, wobei jeder zweite Port einem der Modi der ersten Antennenarraykonfiguration zugeordnet wird und wobei jeder dritte Port so konfigurierbar ist, dass er kommunizierend an eine von einer Vielzahl von Antennen gekoppelt wird, die in der ersten Antennenarraykonfiguration eingesetzt werden.

**Revendications**

1. Procédé, comprenant les étapes suivantes :

sélectionner un sous-ensemble de modes d'une première configuration de réseau d'antennes sur la base d'un degré de variation de chaque mode avec azimut ;
mapper (325) chacun d'une pluralité de premiers ports (310) avec l'un d'une pluralité de deuxièmes ports (315) associés à l'un du sous-ensemble de modes, **caractérisé en ce que** chacun des premiers ports (310) est associé à un mode d'une seconde configuration de réseau d'antennes ; et
transformer des signaux acheminés entre les deuxièmes ports (315) et une pluralité correspondante de troisièmes ports, où chaque deuxième port est associé à l'un des modes de la première configuration de réseau d'antennes et où chaque troisième port est configurable pour être couplé communicativement à l'une d'une pluralité d'antennes déployées dans la première configuration de réseau d'antennes.

2. Procédé selon la revendication 1, dans lequel la transformation des signaux comprend l'application d'une transformation de matrice de Butler avec un incrément de phase prédéterminé entre les deuxièmes ports et les troisièmes ports, où la transformation de matrice de Butler est configurable pour exciter les modes de la première configuration de réseau d'antennes en réponse à des signaux appliqués au niveau des deuxièmes ports.

3. Procédé selon la revendication 1, dans lequel la première configuration de réseau d'antennes est un réseau circulaire uniforme ou un réseau cylindrique uniforme, et dans lequel la seconde configuration de réseau d'antennes est un réseau linéaire uniforme.

4. Procédé selon la revendication 1, dans lequel la sélection du sous-ensemble de modes comprend la sélection de modes de la première configuration de réseau d'antennes qui ont un degré de variation avec azimut qui est inférieur à une valeur de seuil du degré de variation avec azimut.

5. Procédé selon la revendication 4, dans lequel la sélection du sous-ensemble de modes comprend la sélection d'un nombre de modes de la première configuration de réseau d'antennes qui est égal au nombre de premiers ports.

**6.** Procédé selon la revendication 1, dans lequel le mappage de chacun de la pluralité de premiers ports avec l'un de la pluralité de deuxièmes ports comprend le mappage de chacun d'une pluralité de signaux pilotes avec un port différent des deuxièmes ports associés au sous-ensemble de modes de la première configuration de réseau d'antennes.

**7.** Procédé selon la revendication 6, comprenant la fourniture de signaux à la pluralité d'antennes déployées dans la première configuration de réseau d'antennes de sorte que chacun de la pluralité de signaux pilotes soit transmis en utilisant son mode associé du sous-ensemble de modes.

**8.** Procédé selon la revendication 1, dans lequel le mappage des signaux comprend le mappage de signaux soumis à une formation de faisceau ou à un précodage avec les premiers ports correspondant au sous-ensemble de modes sélectionné de la seconde configuration de réseau d'antennes pour transmission par les antennes dans la seconde configuration de réseau d'antennes.

**9.** Procédé selon la revendication 1, comprenant le mappage de signaux de liaison montante reçus par les antennes de la seconde configuration de réseau d'antennes des troisièmes ports aux deuxièmes ports.

**10.** Appareil, comprenant :

    des moyens pour sélectionner un sous-ensemble de modes d'une première configuration de réseau d'antennes sur la base d'un degré de variation de chaque mode avec azimut ;
    des moyens pour mapper (325) chacun d'une pluralité de premiers ports (310) avec l'un d'une pluralité de deuxièmes ports (315) associés à l'un du sous-ensemble de modes, **caractérisé en ce que** chacun des premiers ports (310) est associé à un mode d'une seconde configuration de réseau d'antennes ; et
    des moyens pour transformer des signaux acheminés entre les deuxièmes ports (315) et une pluralité correspondante de troisièmes ports, où chaque deuxième port est associé à l'un des modes de la première configuration de réseau d'antennes et où chaque troisième port est configurable pour être couplé communicativement à l'une d'une pluralité d'antennes déployées dans la première configuration de réseau d'antennes.

**Figure 1**

Figure 2B

Figure 2C

Figure 2A

**Figure 3**

TRANSFORM MATRIX 300

SELECTOR 320

MAPPER 325

BUTLER MATRIX 305

315(1)

315(M)

310(1)

310(M)

330(1)

330(N)

**Figure 4A**

**Figure 4B**

EP 2 856 556 B1

**Figure 5**

**Figure 6B**

**Figure 6A**

Figure 7B

Figure 7A

EP 2 856 556 B1

800

```
       ┌──────────────┐   810   ┌──────────────────┐   820   ⎛   UCA        ⎞
  ───▶ │  PRECODER    │ ──/──▶  │ TRANSFORMER  815 │ ──/──▶  │ (N ELEMENTS) │
       │              │         │                  │         │              │
       │    805       │         │   $T_{N_V \times N}$        │    825       │
       └──────────────┘         └──────────────────┘         ⎝              ⎠
```

# Figure 8

Figure 10

Figure 9

Figure 11

Mode patterns. 8-element 0.5 lambda array

## Figure 12A

Mode patterns. 8-element 0.4 lambda array

## Figure 12B

Beam formation using circular modes.

Figure 13

EP 2 856 556 B1

Figure 14

Figure 15

Figure 16B

Figure 16A

Figure 16C

Mode magnitude. 130deg element. Element Spacing 0.4 lambda

Mode magnitude. 130deg element. Element Spacing 0.5 lambda

**Figure 17A**

**Figure 17B**

Mode magnitude. 130deg element. Element Spacing 0.55 lambda

**Figure 17C**

EP 2 856 556 B1

| PRECODER 1820 | | PROCESSOR 1805 |
| BEAMFORMER 1825 | | DATA STORAGE 1810 |
| TRANSFORMER 1830 | | I/O INTERFACE 1815 |

SERVER    1800

# Figure 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 09869311 A
- US 20040160374 A1
- US 20050085270 A1
- WO 03023897 A1
- GB 2335572 A
- EP 2296225 A1